# EUROPÄISCHE PATENTANMELDUNG

(11) **EP 1 772 684 A2**
(43) Veröffentlichungstag der Anmeldung: **11.04.2007**
(21) Anmeldenummer: 06016212.0
(22) Anmeldetag: 03.08.2006
(51) Int. Cl.: F24H 9/18

(54) **Elektrisches Heizmodul zur Luftstromerwärmung, insbesondere zur Heizung und Belüftung von Sitzen**

(30) Priorität: 06.08.2005 DE 202005012394 U
(71) Anmelder: MicroHellix Systems GmbH, 75248 Ölbronn-Dürrn (DE)
(72) Erfinder: Schehr, Ingo, 76746 Jockgrim (DE)
(74) Vertreter: Kaiser, Magnus

(57) **Zusammenfassung**

Die Erfindung betrifft ein elektrisches Heizmodul zur Luftstromerwärmung, insbesondere zur Heizung und Belüftung von Sitzen, mit mindestens einem PTC-Heizelement 8 und mindestens einem daran angrenzenden, luftdurchströmbaren Wärmeabgabebereich 2 mit wärmeleitenden Lamellen 1, die mit dem PTC-Heizelement 8 in Wirkverbindung stehen und mit diesem zu einem Modul zusammengefasst sind. Die Erfindung ist dadurch gekennzeichnet, dass die wärmeleitenden Lamellen 1 aus Streifen gebildet sind, welche im Bereich des PTC-Heizelements 8 zu mindestens einem aus untereinander in wärmeleitendem Kontakt stehenden Lamellen 1 gebildeten Streifenpaket 3 zusammengefasst sind, während sie im Wärmeabgabebereich 2 aufgefächert sind.

## Beschreibung

Die Erfindung betrifft ein elektrisches Heizmodul zur Luftstromerwärmung nach dem Oberbegriff des Anspruchs 1. Dieses Heizmodul ist insbesondere zur Heizung und Belüftung von Sitzen vorgesehen. Es besteht im Wesentlichen aus mindestens einem PTC-Heizelement und mindestens einem daran angrenzenden, luftdurchströmbaren Wärmeabgabebereich mit wärmeleitenden Lamellen, die mit dem PTC-Heizelement in Wirkverbindung stehen und mit diesem zu einem Modul zusammengefasst sind.

PTC-Elemente sind Halbleiter-Widerstände aus Keramik, deren ohmscher Widerstand temperaturabhängig ist. Die Widerstands-Temperatur-Kennlinie verhält sich nichtlinear: Der Widerstand eines PTC-Heizelements sinkt mit steigender Bauteiltemperatur zunächst leicht, um dann bei einer charakteristischen Temperatur (Referenztemperatur) sehr steil anzusteigen. Dieser insgesamt positive Verlauf der Widerstands-Temperatur-Kennlinie (PTC = Positive Temperature Coefficient) führt dazu, dass ein PTC-Meizelement selbstregelnde Eigenschaften aufweist. Bei einer Bauteiltemperatur, die deutlich niedriger als die Referenztemperatur liegt, weist das PTC-Heizelement einen niedrigen Widerstand auf, so dass entsprechend hohe Stromstärken durchgeleitet werden können. Wenn für eine gute Wärmeabfuhr von der Oberfläche des PTC-Heizelements gesorgt ist, wird also entsprechend viel elektrische Leistung aufgenommen und als Wärme abgegeben. Steigt die Temperatur des PTC-Heizelements jedoch über die Referenztemperatur, steigt der PTC-Widerstand rasch an, so dass die elektrische Leistungsaufnahme auf einen sehr geringen Wert begrenzt wird. Die Bauteiltemperatur nähert sich dann einem oberen Grenzwert, der abhängig ist von der Wärmeaufnahme der Umgebung des PTC-Heizelements. Unter normalen Umweltbedingungen kann die Bauteiltemperatur des PTC-Heizelements also nicht über eine charakteristische höchste Temperatur ansteigen, selbst wenn die gewollte Wärmeableitung im Störfall völlig unterbrochen wird. Dies und die selbstregelnden Eigenschaften eines PTC-Heizelements, aufgrund deren die aufgenommene elektrische Leistung genau der abgegebenen thermischen Leistung entspricht, prädestiniert PTC-Heizelemente für den Einsatz in Heizungs- bzw. Klimaanlagen von Fahrzeugen oder bei sonstigen Anwendungen von Luftstromerwärmungen in Fahrzeugen. Denn aus Sicherheitsgründen dürfen in diesem Anwendungsgebiet auch im Störfall keine feuergefährlichen Temperaturen im Heizelement entstehen, wobei gleichwohl im Normalbetrieb eine hohe Heizleistung gefordert wird.

Zur Innenraumheizung von Kraftfahrzeugen ist es bereits bekannt, elektrische Heizmodule mit einem Rahmen, der eine Mehrzahl von PTC-Heizelementen und daran angrenzenden, luftdurchströmbaren Wärmeabgabebereichen mit wärmeleitenden Lamellen zu einem Modul zusammenfasst, einzusetzen. Ein Beispiel für derartige bekannte elektrische Heizmodule findet sich in der EP 0 350 528 A1.

In der EP 1 479 918 A1 ist ein komplettes Gebläsemodul, bestehend aus einem in einem Gehäuse integrierten Radiallüfter und einem Heizmodul der eingangs genannten Art, offenbart, das zur Sitzheizung in einem belüfteten Kraftfahrzeugsitz dienen soll. Da ein Kraftfahrzeugsitz aus Sicherheitsgründen auch bei Ausfall des Lüfters an dessen Oberfläche eine Maximaltemperatur, die für Menschen verträglich ist, nicht überschreiten darf, sind Heizmodule mit PTC-Heizelementen hervorragend geeignet, zumal sie bei gleicher Sicherheit eine wesentlich höhere Heizleistung abgeben können, als die herkömmlich in Sitzheizungen verwendeten Matten mit elektrischen Widerstandsdrähten, deren Leistungsaufnahme aus Sicherheitsgründen sehr begrenzt sein muss.

Die bisher bekannten elektrischen Heizmodule der eingangs genannten Art bestehen in der Regel aus mehreren Lagen von flächig nebeneinander angeordneten, mit ihrer Schmalseite im Luftstrom stehenden PTC-Heizelementen, die an Ihren flachen Oberseiten und ihren Unterseiten jeweils mit Kontaktblechen elektrisch kontaktiert sind. Die daran angrenzenden Wärmeabgabebereiche weisen mäanderförmig angeordnete Metalllamellen auf, die ebenfalls mit ihrer Schmalseite im Luftstrom stehen und an ihrer Breitseite die Kontaktierungsbleche der PTC-Heizelemente in regelmäßigen Abständen für einen Wärmeübergang aufliegend thermisch kontaktieren. Um eine gute Wärmeableitung von den PTC-Heizelementen an die wärmeleitenden Lamellen zu erzielen, können Wärmeleitkleber oder sonstige Verbindungstechniken verwendet werden; es hat sich jedoch als effizienteste Lösung durchgesetzt, die PTC-Heizelemente und die wärmeleitenden Lamellen in einen diese zu einem Modul zusammenfassenden Rahmen zu setzen und innerhalb des Rahmens mindestens ein Federelement vorzusehen, der die abwechselnd angeordneten Wärmeabgabebereiche mit wärmeleitenden Lamellen und die Stege mit den PTC-Heizelementen aufeinander presst.

Dies bedingt allerdings eine rechteckige Form des elektrischen Heizmoduls mit zeilenartiger Strukturierung der Bauteile, die strömungstechnisch zur Luftstromerwärmung insbesondere dann nicht optimal ist, wenn der Platz für entsprechende luftstromführende Kanäle wie in einem Kraftfahrzeug nur sehr begrenzt ist. Insofern war es für das Gebläsemodul für Kraftfahrzeugsitze nach der EP 1 479 918 A1 folgerichtig, einen Radiallüfter einzusetzen. Radiallüfter sind bekanntermaßen jedoch eher weniger für diesen Zweck geeignet, da sie einen hohen Druck bei entsprechend hohen Ausströmgeschwindigkeiten erzeugen.

Darüber hinaus ist die Fertigung der bekannten elektrischen Heizmodule aufgrund ihres mehrschichtigen, federbelasteten Aufbaus innerhalb eines Rahmens kaum maschinell möglich. Es ist vielmehr relativ viel Handarbeit notwendig.

Ein weiteres Beispiel für ein Gebläsemodul für Kraftfahrzeugsitze ist in der EP 1 464 533 A1 zu finden. Ein Beispiel für ein Heizmodul, das nach Art eines Haartrockners mit einem Gebläse und Widerstands-Heizdrähten im Luftstrom versehen und in einen Fahrzeugsitz integriert ist, ist in der US 6,541,737 B1 beschrieben.

Ausgehend von diesem Stand der Technik liegt der vorliegenden Erfindung die Aufgabe zugrunde, ein elektrisches Heizmodul der eingangs genannten Art hinsichtlich einer maschinellen Fertigbarkeit zu verbessern.

Gelöst ist diese Aufgabe durch ein elektrisches Heizmodul mit den Merkmalen des Anspruchs 1. Bevorzugte Ausgestaltungen und Weiterbildungen der Erfindung sind in den Ansprüchen 2 bis 14 niedergelegt. Eine bevorzugte Verwendung des erfindungsgemäßen Heizmoduls findet sich im Anspruch 15.

Gemäß der vorliegenden Erfindung wird ein elektrisches Heizmodul der eingangs genannten Art also dadurch modifiziert, dass die wärmeleitenden Lamellen aus Streifen gebildet sind, welche im Bereich des PTC-Heizelements zu mindestens einem Streifenpaket zusammengefasst sind. Dieses Streifenpaket wird aus untereinander in wärmeleitendem Kontakt stehenden Lamellen gebildet, während die Streifen im Wärmeabgabebereich aufgefächert sind, so dass dieser von Luft durchströmbar ist. Der Wärmeübergang vom PTC-Heizelement in die Lamellen erfolgt also in einem Bereich, in dem die Lamellen zu einem kompakten Paket zusammengefasst sind und wie ein massiver Block wirken, in dem sich die Wärme vom PTC-Heizelement schnell ausbreitet. Dort, wo die Lamellen in den Wärmeabgabebereich reichen, sind sie jedoch aufgefächert, das heißt jeweils voneinander beabstandet, indem sie zu den Randbereichen der Streifenpakete hin beim Übergang in den Wärmeabgabebereich zunehmend abgewinkelt sind. Innerhalb der einzelnen Lamellen erfolgt wiederum eine gute Wärmeleitung, so dass die Wärme im Wärmeabgabebereich sehr effizient an die durchströmende Luft abgegeben werden kann. Gleichzeitig ist das Herstellen von solchen Streifen als Lamellen und das Zusammenfassen derselben zu Streifenpakten sowie das Auffächern der Lamellen in den Wärmeabgabebereich hinein komplett maschinell machbar und darüber hinaus sehr effizient und kostengünstig möglich.

Das erfindungsgemäße Auffächern der aus Streifen gebildeten wärmeleitenden Lamellen, ausgehend vom Bereich des PTC-Heizelements, in welchem die Lamellen zu Streifenpaketen zusammengefasst sind, bedingt naturgemäß eine fächerartige Anordnung der Lamellen im Wärmeabgabebereich, so dass dieser zweckmäßigerweise eine gekrümmte Form aufweist. Besondere Vorteile ergeben sich, wenn der Wärmeabgabebereich dementsprechend ringförmig, insbesondere kreisrund ausgebildet ist und den Bereich des PTC-Heizelements in einer zu einer Luftströmung in etwa senkrecht stehenden Ebene umgibt. In diesem ringförmigen Wärmeabgabebereich verlaufen dann die Lamellen im Wesentlichen radial, so dass das erfindungsgemäße elektrische Heizmodul in einen strömungsgünstigen zylindrischen Luftströmungskanal oder ein entsprechendes Rohr eingesetzt werden kann. Hierdurch wird eine sehr gleichmäßige Durchströmung des Wärmeabgabebereichs ohne Bildung von heißen Bereichen, wie zum Beispiel in den Ecken eines herkömmlichen rechteckigen, zeilenartig angeordneten Heizmoduls, gewährleistet. Vor allem jedoch ist ein Heizmodul mit ringförmigem Wärmeabgabebereich zur effizienten Kombination mit einem Axial- oder Diagonallüfter geeignet; dieser kann dann ganz einfach vor oder hinter das erfindungsgemäße Heizmodul gesetzt werden, um einen überhitzungssicheren Heizlüfter zu bilden.

Das PTC-Heizelement kann zwischen zwei Streifenpaketen sitzen und mit diesen nicht nur in wärmeleitendem, sondern auch in elektrisch leitendem Kontakt stehen. Wenn gleichzeitig ein elektrisch isolierendes Rahmenelement vorgesehen ist, welches zwischen den beiden beteiligten Streifenpaketen angeordnet ist und das PTC-Heizelement in sich aufnimmt, kann das PTC-Heizelement über die Streifenpakete mit Strom versorgt werden. Dies ganz einfach dadurch, dass das erste Streifenpaket an der einen Seite des PTC-Heizelements auf ein anderes elektrisches Potential gelegt wird als das andere Streifenpaket auf der anderen Seite des PTC-Heizelements, so dass durch das PTC-Heizelement hindurch der Strom fließt, der zur Erwärmung desselben notwendig ist. Auf diese Art und Weise kann das PTC-Heizelement sehr kompakt in die Streifenpakete integriert und vor allem sehr leicht, insbesondere maschinell in diese eingelegt werden, so dass sich entsprechende Vorteile hinsichtlich der Kompaktbauweise, des effizienten Wärmeübergangs sowie der leichten maschinellen Fertigbarkeit ergeben.

Das elektrisch isolierende Rahmenelement kann lediglich die Streifenpakete voneinander trennen; es kann jedoch auch in Form einer Lamelle ausgebildet sein und sich in den Wärmeabgabebereich hinein erstrecken. So ist gewährleistet, dass auch im Wärmeabgabebereich keine unabsichtliche, elektrisch leitende Brücke zwischen Lamellen des einen Streifenpakets und Lamellen des anderen Streifenpakets entstehen können. Außerdem kann das Rahmenelement dann mit Montageelementen zum Ansetzen an ein Gehäuse für das Modul versehen werden, was wiederum die automatische und maschinelle Fertigung erleichtert.

In diesem Zusammenhang ist zu erwähnen, dass in einem erfindungsgemäßen Heizmodul selbstverständlich auch drei oder mehr Streifenpakete mit jeweils zwischenliegenden PTC-Heizelementen und gegebenenfalls entsprechenden, elektrisch isolierenden Rahmenelementen zu einem Modul zusammengefasst sein können.

Zur elektrischen Kontaktierung der PTC-Heizelemente können in oder an den Streifenpaketen Kontaktierungslaschen angeordnet sein, die mit der Stromversorgung verbunden werden. Auch dies erhöht wiederum den möglichen Automatisierungsgrad bei der maschinellen Fertigung des erfindungsgemäßen Heizmoduls.

Soweit ein elektrisch isolierendes Rahmenelement zwischen den Streifenpaketen vorgesehen ist, in welches das PTC-Heizelement integriert ist, ist es bevorzugt, dass das PTC-Heizelement von einer weichelastischen Dichtungsschicht umgeben im elektrisch isolierenden Rahmenelement sitzt. Diese weichelastische Dichtungsschicht kann, was die Fertigung wiederum enorm vereinfacht, eine O-Ring-Gummidichtung, oder auch eine weichelastische Komponente des Rahmenelement-Materials sein. Im letzteren Fall wäre das Rahmenelement dann beispielsweise in Zweikomponenten-Spritzgusstechnik aus Kunststoff gefertigt. Neben dem mechanischen Schutz für das PTC-Heizelement beim Zusammenbau bietet eine solche weichelastische Dichtung auch einen Feuchtigkeitsschutz, der bei einem Heizmodul zum Einbau in einen Sitz durchaus wichtig sein kann.

Die wärmeleitenden Lamellen bestehen vorzugsweise aus Aluminium- oder Kupfer-Blechstreifen. Diese Materialien bieten eine hohe Wärmeleitfähigkeit und können recht unkompliziert maschinell verarbeitet werden.

Die Streifenpakete, zu denen die wärmeleitenden Lamellen im Bereich des PTC-Heizelements zusammengefasst sind, werden vorzugsweise durch Verschweißen zusammengehalten, beispielsweise mittels einer Laserschweißnaht oder ähnlichem. Zusätzlich können die Streifenpakete von einem Federbügel aufeinandergepresst werden. Dieser Federbügel kann vorzugsweise nicht nur die jeweiligen Streifenpakete, sondern alle Streifenpakete mit zwischenliegenden PTC-Heizelementen umfassen und aufeinanderpressen, so dass der Wärmeübergang zwischen den PTC-Heizelementen und den Streifenpaketen sowie zwischen den einzelnen Lamellen untereinander optimal ist.

Zur einfachen und lagegenauen maschinellen Fertigung können die als Streifen ausgebildeten Lamellen außerdem mit Zentrierbohrungen zum lagerichtigen Aufeinandersetzen bei der Montage versehen sein.

Soweit ein Gehäuse vorgesehen ist, in das das erfindungsgemäße elektrische Heizmodul eingebaut wird, ist es bevorzugt, wenn dieses Gehäuse einen zylindrischen oder-zur Geräuschreduzierung - einen konischen Luftströmungskanal bildet, in dem das Heizmodul und, stromabwärts und/oder stromaufwärts des Heizmoduls, ein Axial- oder Diagonallüfter aufgenommen sind.

Dieser Axial- oder Diagonallüfter kann ein handelsüblicher Lüfter mit Lüftergehäuse und elektrischen Anschlüssen sein, so dass es zweckmäßig ist, wenn das Gehäuse des erfindungsgemäßen Heizmoduls den Axial- oder Diagonallüfter mitsamt seinem eigenen Lüftergehäuse aufnimmt.

Ganz besondere Vorteile ergeben sich mit dem elektrischen Heizmodul nach der vorliegenden Erfindung dann, wenn es als Gebläse in einem belüfteten Sitz, insbesondere Fahrzeugsitz verwendet wird, wobei bedarfsweise die durch das PTC-Heizelement und die wärmeleitenden Lamellen ermöglichte Luftstromerwärmung als Sitzheizung zugeschaltet werden kann.

Ein Ausführungsbeispiel der vorliegenden Erfindung wird im Folgenden anhand der beigefügten Zeichnungen näher beschrieben und erläutert. Es zeigen:
- Figur 1: eine perspektivische Ansicht eines erfindungsgemäßen elektrischen Heizmoduls;
- Figur 2: eine Draufsicht auf das Heizmodul aus Figur 1;
- Figur 3: eine perspektivische Explosionszeichnung des Heizmoduls aus Figur 1;
- Figur 4: das Heizmodul aus Figur 1 mit Gehäuse und Gebläse, vor dem Montieren;
- Figuren 5: das im Gehäuse montierte Heizmodul in einer perspektivischen Darstellung von oben;
- Figuren 6: eine perspektivische Darstellung des im Gehäuse montierten Heizmoduls, von unten gesehen.

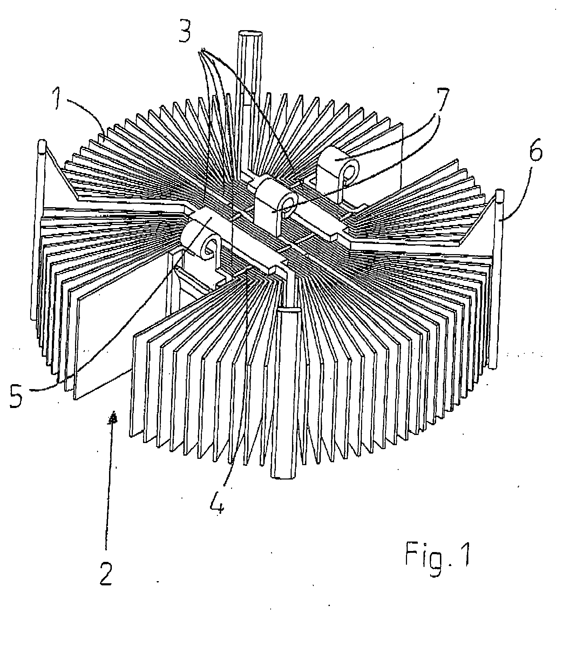

Das in Figur 1 in perspektivischer Darstellung gezeigte, fertig montierte Ausführungsbeispiel für ein elektrisches Heizmodul nach der vorliegenden Erfindung besteht aus einer Vielzahl von wärmeleitenden Lamellen 1, die aus Aluminiumblech-Streifen gefertigt sind und einen ringförmigen Wärmeabgabebereich 2 radial ausfüllen. Im Zentrum des Wärmeabgabebereichs 2 sind die wärmeleitenden Lamellen 1 zu insgesamt vier Streifenpaketen 3 zusammengefasst, wobei die Lamellen 1 jedes Streifenpakets 3 dicht aneinandergepackt in wärmeleitenden und elektrisch leitendem Kontakt untereinander stehen. Mittels Schweißnähten 4 sind die Lamellen 1 der einzelnen Streifenpakete 3 aneinander fixiert.

Zwischen den Streifenpaketen 3 sind zwei elektrisch isolierende Rahmenelemente 5 angeordnet, welche die beiden mittleren Streifenpakete 3 jeweils von den äußeren Streifenpaketen 3 isolieren. Die Rahmenelemente 5 erstrecken sich vom zentralen Bereich innerhalb des Wärmeabgabebereichs 2 ausgehend bis in den Wärmeabgabebereich 2 und setzen sich dort in Montageelementen 6 fort, an welchen, wie unten beschrieben, ein Gehäuse und ein Lüfter angesetzt werden können.

Die beiden mittleren Streifenpakete 3 werden lediglich durch eine Kontaktierungslasche 7 voneinander getrennt, mittels welcher die in den Rahmenelementen 5 integrierten (hier nicht sichtbaren) PTC-Heizelemente an eine (nicht dargestellte) Stromversorgung angeschlossen werden können. Weitere Kontaktierungslaschen 7 sind an den Randbereichen der äußeren Streifenpakete 3 vorgesehen, um auch die jeweils anderen Kontaktflächen der PTC-Heizelemente an die Stromversorgung anzuschließen.

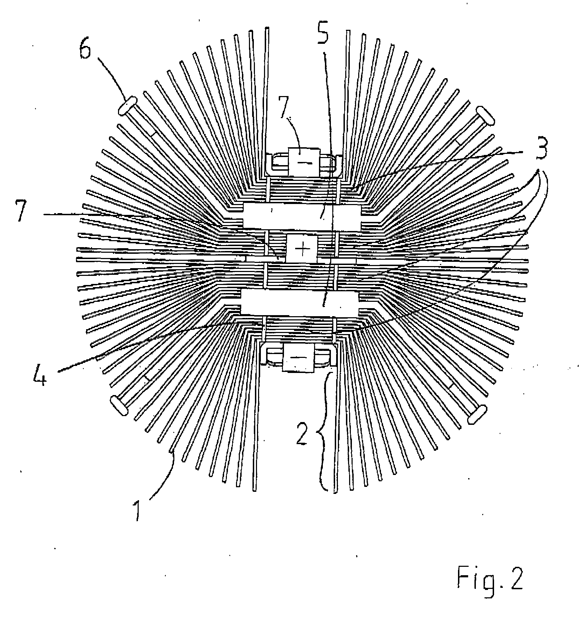

Die elektrische Kontaktierung ist in Figur 2, einer Draufsicht auf das elektrische Heizmodul aus Figur 1, mit Symbolen verdeutlicht. Die mittlere Kontaktierungslasche 7 wird, mit einem Pluszeichen symbolisiert, auf ein anderes elektrisches Potential gesetzt, als die beiden äußeren Kontaktierungslaschen 7, welche ein Minuszeichen tragen. Da die Lamellen 1 im zentralen Bereich um die beiden in den Rahmenelementen 5 befindlichen PTC-Heizelemente vollflächig aufeinanderliegen, bilden sie nicht nur einen guten Wärmeleiter, sondern auch einen guten elektrischen Leiter, so dass der Strom von den Kontaktierungslaschen 7 über die Streifenpakete 3 an die PTC-Heizelemente gelangt. Die elektrisch isolierenden Rahmenelemente 5 sorgen dafür, dass weder im Bereich der Streifenpakete 3 noch im Wärmeabgabebereich 2 ein Kurzschluss entstehen kann.

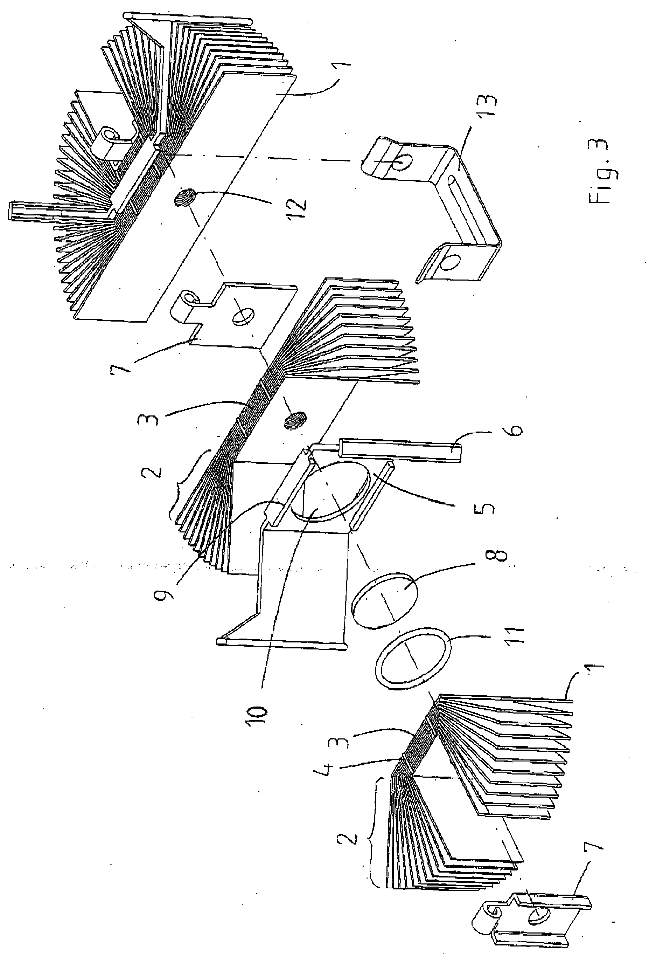

In Figur 3, einer Explosionsdarstellung der Figur 1, wird deutlich, wie die beiden nun sichtbaren PTC-Heizelemente 8 in die Rahmenelemente 5 integriert sind. Die Rahmenelemente 5, die im Übrigen oben und unten mit Montagerahmen 9 zur exakten Positionierung versehen sind, weisen eine kreisrunde Ausnehmung 10 auf, in die die PTC-Heizelemente 8 und eine O-Ring-Dichtung 11 passend eingesetzt werden können. Die wärmeleitenden Lamellen 1 sind in ihren mittigen Bereichen zu Streifenpaketen 3 zusammengefasst, während sie sich im Wärmeabgabebereich 2 radial auffächern. Die Streifenpakete 3 sind mittels Schweißnähten 4 fixiert. Die Lamellen 1 weisen Zentrierbohrungen 12 auf, mit deren Hilfe sie exakt gestapelt werden können, um die Streifenpakete 3 zu bilden. Nach dem Zusammenbau der vier Streifenpakete 3 und der beiden Rahmenelemente 5 mit den beiden PTC-Heizelementen 8 sowie dem Zwischensetzen bzw. Aufsetzen der Kontaktierungslaschen 7 wird das gesamte Modul schließlich mit einem Federbügel 13 fixiert. Der Federbügel 13 übt außerdem eine permanente Anpresskraft auf die Streifenpakete 3 untereinander aus, so dass die beidseits der PTC-Heizelemente 8 liegenden Streifenpakete 3 gegen die PTC-Heizelemente 8 gepresst werden, um einen optimalen Kontakt sicherzustellen.

Anhand der Figuren 1 bis 3 ist erkennbar, dass das erfindungsgemäße Heizmodul sehr leicht zu montieren ist und ohne weiteres maschinell und vollautomatisch hergestellt sowie zusammengesetzt werden kann. Das Einsetzen in ein Gehäuse und das Ansetzen eines Lüfters ist, wie unten beschrieben, ebenso leicht möglich, wie die elektrische Kontaktierung des Moduls mittels der Kontaktierungslaschen 7.

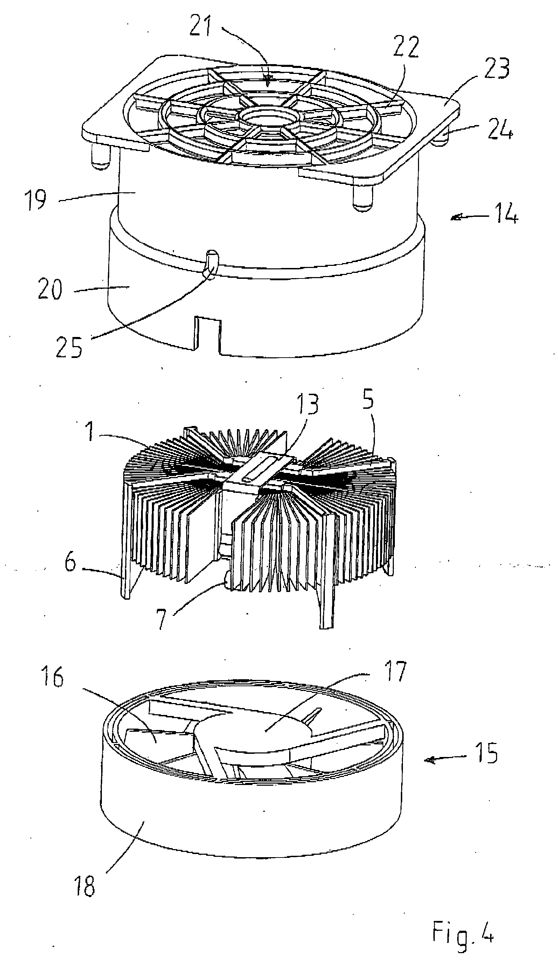

Figur 4 zeigt eine perspektivische Darstellung des elektrischen Heizmoduls aus den Figuren 1 bis 3, eines Gehäuses 14 und eines Axiallüfters 15 vor deren Zusammenbau. Bei dem Axiallüfter 15 handelt es sich um einen handelsüblichen Axiallüfter mit Rotor 16, Motor 17 und Gehäusering 18. Das Gehäuse 14 besteht aus einem zylindrischen Wärmetauscherbereich 19, einem zylindrischen Lüfterbereich 20 und einer Luftaustrittsöffnung 21, welche mit luftleitenden Stegen 22 versehen ist. Am Gehäuse 14 angeformt ist eine Art Montageflansch 23 mit Zentrierstiften 24. Um den Axiallüfter 15 mitsamt seinem Gehäusering 18, ohne ihn modifizieren zu müssen, in das Gehäuse 14 einsetzen zu können, ist der Lüfterbereich 20 gegenüber dem Wärmetauscherbereich 19, in welchen das Heizmodul eingesetzt werden soll, erweitert. Die Montageelemente 6 der Rahmenelemente 5 dienen hierbei dazu, den Gehäusering 18 des Axiallüfters 15 lagerichtig gegenüber den Lamellen 1 zu fixieren und ortsfest im Gehäuse 14 zu halten. Eine Öffnung 25 im Gehäuse dient zur Durchführung von Kabeln zur Stromversorgung des Motors 17 des Axiallüfters 15 sowie der PTC-Heizelemente, die über die Kontaktierungslaschen 7 mit der Stromversorgung verbunden werden.

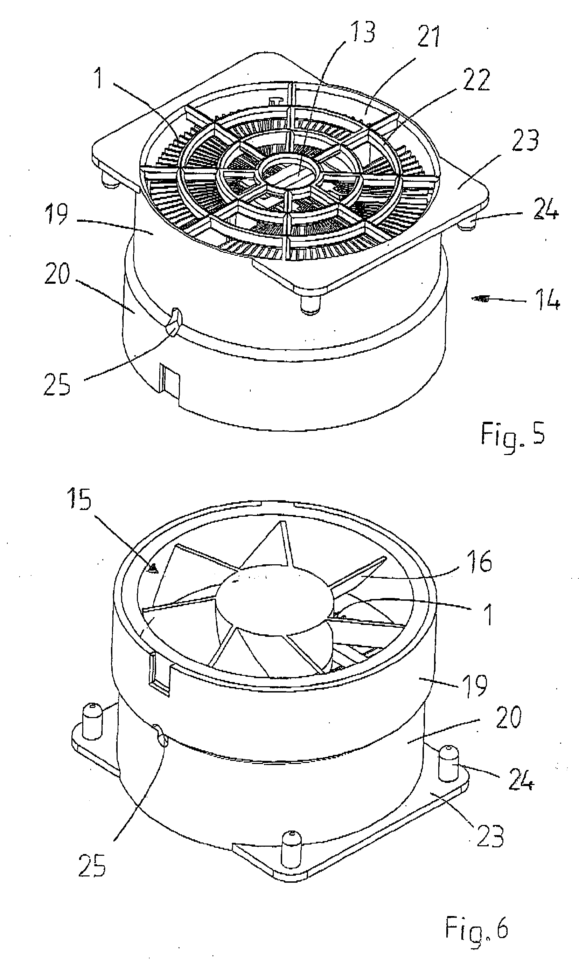

In den Figuren 5 und 6 sind perspektivische Darstellungen von oben und unten der fertig montierten Anordnung aus Figur 4 gezeigt. Anhand dieser Darstellungen wird deutlich, welch kompakte und leicht maschinell montierbare Bauweise eines Lüfters mit Luftstromerwärmung zum Einbau insbesondere in belüftete Sitze die vorliegende Erfindung ermöglicht. Gleichzeitig wird anhand der Figuren 1 bis 6 klar, dass das erfindungsgemäße Heizmodul mit einem sehr hohen Automatisierungsgrad problemlos maschinell hergestellt und montiert werden kann. Das in den Figuren 5 und 6 gezeigte, mit elektrischem Heizmodul und mit einem Axiallüfter 15 bestückte Gehäuse 14 kann bedarfsweise sowohl zur Belüftung beispielsweise eines Fahrzeugsitzes oder, bei Aktivieren der PTC-Heizelemente, als Sitzheizung mit sehr effizienter Luftstromerwärmung verwendet werden, wobei die Luftstromerwärmung aufgrund des mit radial angeordneten wärmeleitenden Lamellen 1 versehenen, kreisrunden Wärmeabgabebereichs 2 eine sehr gleichmäßige Temperaturverteilung im Gehäuse 14 und letztendlich im Sitz herstellt. Aufgrund der Besonderheiten der PTC-Heizelemente ist hierbei eine sehr hohe Anfangsleistung zum Aufheizen gegeben, während wegen der positiven Temperaturkennlinie der PTC-Heizelemente eine verträgliche Maximaltemperatur unter allen Umständen, also auch bei einer Fehlfunktion, sichergestellt ist.

## Patentansprüche

1. Elektrisches Heizmodul zur Luftstromerwärmung, insbesondere zur Heizung und Belüftung von Sitzen, mit mindestens einem PTC-Heizelement (8) und mindestens einem daran angrenzenden, luftdurchströmbaren Wärmeabgabebereich (2) mit wärmeleitenden Lamellen (1), die mit dem PTC-Heizelement (8) in Wirkverbindung stehen und mit diesem zu einem Modul zusammengefasst sind,
**dadurch gekennzeichnet,**
**dass** die wärmeleitenden Lamellen (1) aus Streifen gebildet sind, welche im Bereich des PTC-Heizelements (8) zu mindestens einem aus untereinander in wärmeleitendem Kontakt stehenden Lamellen (1) gebildeten Streifenpaket (3) zusammengefasst sind, während sie im Wärmeabgabebereich (2) aufgefächert sind.

2. Elektrisches Heizmodul nach Anspruch 1,
**dadurch gekennzeichnet,**
**dass** der Wärmeabgabebereich (2) ringförmig, insbesondere kreisrund ausgebildet ist und den Bereich des PTC-Heizelements (8) in einer zu einer Luftströmung in etwa senkrecht stehenden Ebene umgibt.

3. Elektrisches Heizmodul nach einem der Ansprüche 1 oder 2,
**dadurch gekennzeichnet,**
**dass** das PTC-Heizelement (8) zwischen zwei Streifenpaketen (3) sitzt und mit diesen sowohl in wärmeleitendem als auch in elektrisch leitendem Kontakt steht, dass ein elektrisch isolierendes Rahmenelement (5) zwischen den beiden Streifenpaketen (3) angeordnet ist, in welches das PTC-Heizelement (8) integriert ist, und dass das PTC-Heizelement (8) über die Streifenpakete (3) mit Strom versorgt wird.

4. Elektrisches Heizelement nach Anspruch 3,
**dadurch gekennzeichnet,**
**dass** das Rahmenelement (5) in Form einer Lamelle (1) ausgebildet ist und sich in den Wärmeabgabebereich (2) hinein erstreckt.

5. Elektrisches Heizmodul nach einem der Ansprüche 3 oder 4,
**dadurch gekennzeichnet,**
**dass** das Rahmenelement (5) Montageelemente (6) zum Ansetzen an ein Gehäuse (14) für das Modul aufweist.

6. Elektrisches Heizmodul nach mindestens einem der Ansprüche 3 bis 5,
**dadurch gekennzeichnet,**
**dass** in oder an den Streifenpaketen (3) Kontaktierungslaschen (7) für die Stromversorgung des PTC-Heizelements (8) vorgesehen sind.

7. Elektrisches Heizmodul nach mindestens einem der Ansprüche 3 bis 6,
**dadurch gekennzeichnet,**
**dass** das PTC-Heizelement (8) von einer weichelastischen Dichtungsschicht umgeben im elektrisch isolierenden Rahmenelement (5) sitzt.

8. Elektrisches Heizmodul nach Anspruch 7,
**dadurch gekennzeichnet,**
**dass** die weichelastische Dichtungsschicht eine O-Ring-Gurnmidichtung (11) oder eine weichelastische Komponente des Rahmenelement-Materials ist.

9. Elektrisches Heizmodul nach mindestens einem der Ansprüche 1 bis 8,
**dadurch gekennzeichnet,**
**dass** die Streifenpakete (3) durch eine Schweißnaht (4) zusammengehalten sind.

10. Elektrisches Heizmodul nach mindestens einem der Ansprüche 1 bis 9,
**dadurch gekennzeichnet,**
**dass** die wärmeleitenden Lamellen (1) aus Aluminium- oder Kupfer-Blechstreifen bestehen.

11. Elektrisches Heizmodul nach mindestens einem der Ansprüche 1 bis 10,
**dadurch gekennzeichnet,**
**dass** die Blechstreifen Zentrierbohrungen (12) zum lagerichtigen Aufeinandersetzen bei der Montage aufweisen.

12. Elektrisches Heizmodul nach mindestens einem der Ansprüche 1 bis 11,
**dadurch gekennzeichnet,**
**dass** die Streifenpakete (3) von einem Federbügel (13) aufeinandergepresst werden.

13. Elektrisches Heizmodul nach Anspruch 5,
**dadurch gekennzeichnet,**
**dass** das Gehäuse (14) einen zylindrischen oder konischen Luftströmungskanal bildet, in dem das Heizmodul und, stromabwärts und/oder stromaufwärts des Heizmoduls, ein Axial- oder Diagonallüfter (15) aufgenommen sind.

14. Elektrisches Heizmodul nach Anspruch 13,
**dadurch gekennzeichnet,**
**dass** der Axial-oder Diagonallüfter (15) in einem eigenen Lüftergehäuse (18) sitzt, welches vom Gehäuse (14) aufgenommen wird.

15. Verwendung eines elektrischen Heizmoduls nach einem der Ansprüche 1 bis 14 in einem belüfteten Sitz als Gebläse mit bedarfsweise zuschaltbarer Luftstromerwärmung, insbesondere in einem Fahrzeugsitz.
